# EUROPEAN PATENT APPLICATION

(11) **EP 4 796 978 A1**
(43) Date of publication of application: **26.08.2026**
(21) Application number: 23956015.4
(22) Date of filing: 16.10.2023
(51) Int. Cl.: G02B 27/02

(54) **PROJECTION SUBSTRATE AND GLASSES-TYPE TERMINAL**

(71) Applicant: Cellid, Inc., Tokyo 106-0032 (JP)
(72) Inventor: UEDA, Masamichi, Tokyo 106-0032 (JP)
(74) Representative: Plougmann Vingtoft a/s
(86) International application number: PCT/JP2023/037421
(87) International publication number: WO 2025/083761

(57) **Abstract**

A projection substrate including: an incident region that receives projection light and includes a diffraction grating that guides at least a part of the incident projection light toward a first direction and a second direction within the projection substrate; a first splitting region that includes a diffraction grating that guides at least a part of the incident projection light toward a third direction; a second splitting region that includes a diffraction grating that guides at least a part of the incident projection light toward a fourth direction; and an emission region that receives the projection light guided in the first splitting region and the projection light guided in the second splitting region, respectively, and includes a diffraction grating that emits at least a part of the incident projection light as image light.

## Description

### [Technical Field]

The present invention relates to a projection substrate and a glasses-type terminal.

### [Background of the Invention]

Conventionally, an eyeglass-type device, a head-mounted display, and the like have been known for displaying two-dimensional images to be observed by a user, utilizing an optical system including a waveguide and the like (for example, see Patent Documents 1 and 2). Two-dimensional diffraction gratings that diffract light in two directions are also known (see, for example, Patent Document 3).

### [Prior Art]

### [Patent Document]

[Patent Document 1] Japanese Unexamined Patent Application Publication No. 2017-207686
[Patent Document 2] WO 2023/047488
[Patent Document 3] U.S. Patent No. 8160411

### [Brief Description of the Invention]

### [Problem to be solved by the invention]

Since such devices incorporate an optical system into a limited space, the optical system may become complex, and manufacturing cost may increase.

The present invention has been made in view of these points, and its object is to reduce the manufacturing cost of a projection substrate that allows a user to observe a projection image.

### [Means for Solving the Problem]

A first aspect of the present invention provides a projection substrate for projecting image light onto a second surface while transmitting at least a part of light that entered from a first surface to the second surface opposite to the first surface, the projection substrate including: an incident region configured to receive projection light for projecting the image light and including a diffraction grating that guides at least a part of the incident projection light toward a first direction within the projection substrate and toward a second direction different from the first direction; a first splitting region provided at a position in the first direction from the incident region, configured to receive the projection light guided in the incident region, and including a diffraction grating that guides at least a part of the incident projection light toward a third direction different from the first direction; a second splitting region provided at a position in the second direction from the incident region, configured to receive the projection light guided in the incident region, and including a diffraction grating that guides at least a part of the incident projection light toward a fourth direction different from the second direction; and an emission region provided at a position, located both in the third direction from the first splitting region and in the fourth direction from the second splitting region, configured to receive the projection light guided in the first splitting region and the projection light guided in the second splitting region, respectively, and including a diffraction grating that emits at least a part of the incident projection light as the image light from the second surface.

The incident region may include: a first diffraction grating configured to receive, among the projection light incident on the incident region, light emitted to the first splitting region; and a second diffraction grating provided at a position different from that of the first diffraction grating and configured to receive, among the projection light incident on the incident region, light emitted to the second splitting region.

The incident region may include a two-dimensional diffraction grating, guide at least a part of the incident projection light to the first splitting region, and guide at least a part of the remaining light of the incident projection light to the second splitting region.

The incident region may include a plurality of diffraction gratings having different periods or a two-dimensional diffraction grating, guide light having a first wavelength included in the projection light to the first splitting region, and guide light having a second wavelength different from the first wavelength included in the projection light to the second splitting region.

The incident region may guide light having red and green wavelengths among the projection light to the first splitting region, and guide light having green and blue wavelengths among the projection light to the second splitting region.

The incident region may include a plurality of diffraction gratings having the same period or a two-dimensional diffraction grating, and a wavelength of the projection light guided to the first splitting region may be the same as a wavelength of the projection light guided to the second splitting region.

The first splitting region may guide at least a part of the projection light incident from the incident region to a region including a predetermined region within the emission region, and the second splitting region may guide at least a part of the projection light incident from the incident region to a region not including the predetermined region within the emission region.

The first splitting region may guide at least a part of the projection light incident from the incident region to a region including a predetermined region within the emission region, and the second splitting region may guide at least a part of the projection light incident from the incident region to a region including the predetermined region within the emission region.

The emission region may include a two-dimensional diffraction grating that emits at least a part of the projection light incident from the first splitting region and at least a part of the projection light incident from the second splitting region as the image light from the second surface.

A second aspect of the present invention provides a glasses-type terminal worn by a user, the glasses-type terminal including: the projection substrate according to the first aspect, which is provided as at least one of a lens for a right eye and a lens for a left eye of the user, and projects the image light onto the second surface, while transmitting at least a part of light entering from the first surface through the eyes of the user; a frame that fixes the projection substrate; and a projection unit provided in the frame and configured to irradiate the incident region of the projection substrate with the projection light for projecting the image light to the emission region.

### [Effect of the Invention]

According to the present invention, it is possible to reduce manufacturing cost of a projection substrate that allows a user to observe a projection image.

### [Brief Description of the Drawings]

FIG. 1 shows a configuration example of a glasses-type terminal 10 according to the present embodiment.
FIG. 2 shows an overview of an optical path of a projection light in the glasses-type terminal 10 according to the present embodiment.
FIG. 3 shows an overview of an optical path of a projection light in a conventional projection substrate S.
FIG. 4 shows an example of conventional projection light L and image light P.
FIG. 5 shows a configuration example of a glasses-type terminal D in which conventional projection substrates S are stacked to form a multilayered structure.
FIG. 6 shows an overview of an optical path of a projection light in a projection substrate 100 according to the present embodiment.
FIG. 7 shows a configuration example of the projection substrate 100 according to the present embodiment.
FIG. 8 shows a configuration example of the glasses-type terminal 10 in which the projection substrate 100 according to the present embodiment and the conventional projection substrate S are stacked to form a multilayered structure.
FIG. 9 shows a configuration example of the glasses-type terminal 10 in which projection substrates 100 according to the present embodiment are stacked to form a multilayered structure.

### [Description of Embodiments]

### <Configuration example of glasses-type terminal 10>

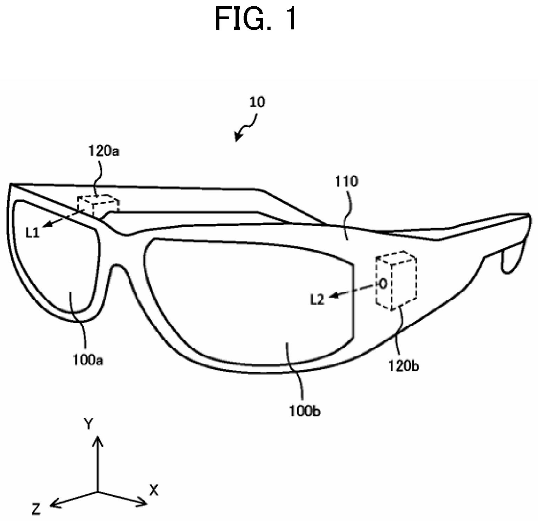

FIG. 1 shows a configuration example of a glasses-type terminal 10 according to the present embodiment. In this embodiment, three mutually orthogonal axes are designated as the X-axis, Y-axis, and Z-axis. The glasses-type terminal 10 is a wearable device worn by a user, for example. The glasses-type terminal 10 projects image light onto a display region provided on a projection substrate 100 while having a user observe a view through glasses. The glasses-type terminal 10 includes the projection substrate 100, a frame 110, and a projection unit 120.

The projection substrate 100 projects the image light onto a second surface while transmitting at least a part of the light entering from a first surface to the eyes of the user. Here, the first surface of the projection substrate 100 is a surface facing the side opposite to the user when the user is wearing the glasses-type terminal 10. The second surface of the projection substrate 100 is a surface facing the user when the user is wearing the glasses-type terminal 10. FIG. 1 shows an example in which the first surface and the second surface of the projection substrate 100 are disposed substantially parallel to an XY plane. The projection substrate 100 is, for example, a glass substrate in which a diffraction grating functioning as a waveguide is formed. The projection substrate 100 will be described later.

The frame 110 fixes the projection substrate 100. The frame 110 is provided with the projection substrate 100 as at least one of a lens for the right eye or a lens for the left eye of the user. FIG. 1 shows an example in which a projection substrate 100a is provided as the lens for the right eye of the user on the frame 110, and a projection substrate 100b is provided as the lens for the left eye.

Alternatively, the frame 110 may be provided with one projection substrate 100 as the lens for the right eye or the lens for the left eye of the user. Further, the frame 110 may be provided with one projection substrate 100 as a lens for both eyes of the user. In this case, the frame 110 may have a goggle shape. The frame 110 has parts such as a temple and a strap so that the user can wear the glasses-type terminal 10.

The projection unit 120 is provided in the frame 110 and irradiates the projection substrate 100 with the projection light for projecting image light. The frame 110 is provided with one or a plurality of such projection units 120. FIG. 1 shows an example in which a projection unit 120a for irradiating a projection substrate 100a with a projection light L1 and a projection unit 120b for irradiating a projection substrate 100b with a projection light L2 are provided in the frame 110.

The projection unit 120 may be provided at a portion of the frame 110 to which the projection substrate 100 is fixed, or may be provided at the temple or the like of the frame 110. The projection unit 120 is preferably provided integrally with the frame 110. For example, the projection unit 120 irradiates the projection substrate 100 with projection light including a single wavelength to allow the user to observe a monochromatic image. Further, the projection unit 120 may cause the user to observe an image including multiple colors by irradiating the projection substrate 100 with projection light including a plurality of wavelengths.

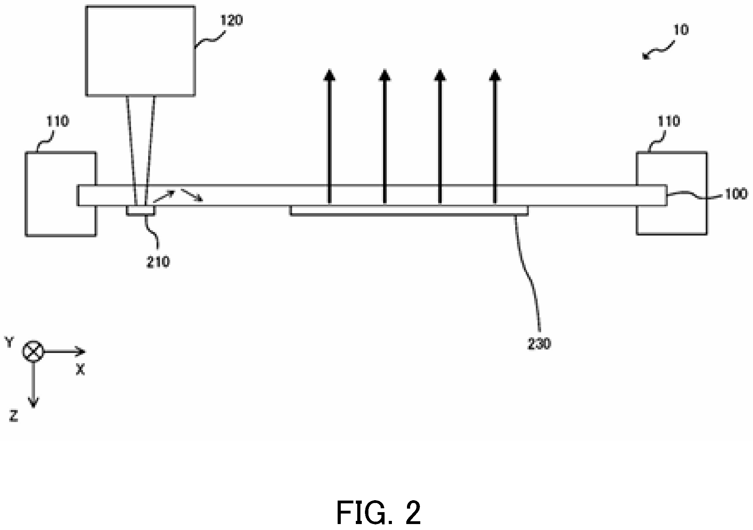

FIG. 2 schematically shows an optical path of projection light in the glasses-type terminal 10 according to the present embodiment. The projection unit 120 irradiates an incident region 210 provided on the projection substrate 100 with projection light. The incident region 210 guides projection light into the inside of the projection substrate 100. The projection substrate 100 emits the projection light, which has been guided inside the substrate, as image light from an emission region 230. The incident region 210 and the emission region 230 will be described later.

### <Optical path of conventional projection substrate S>

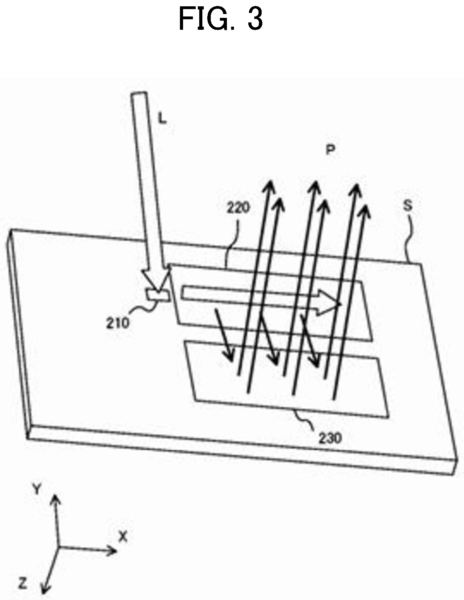

FIG. 3 schematically shows an optical path of projection light in a conventional projection substrate S. The projection substrate S includes the incident region 210, a splitting region 220, and the emission region 230. A projection light L enters the incident region 210, passes through the splitting region 220, and is emitted from the emission region 230 as an image light P. The splitting region 220 guides the projection light L to the emission region 230 in portions as the projection light L propagates away from the incident region 210.

Similarly, the emission region 230 also emits portions of the projection light L as portions of the image light P, as the projection light L propagates away from the splitting region 220. Accordingly, the projection substrate S emits, from the emission region 230, the projection light L incident on the incident region 210 as the image light P.

### <Example of conventional projection light L and image light P>

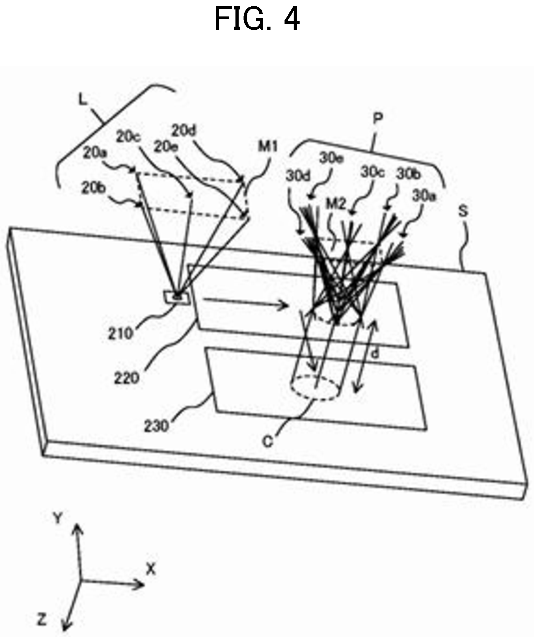

FIG. 4 shows an example of the projection light L radiated from a conventional projection unit 120 to the conventional projection substrate S and the image light P emitted from the conventional projection substrate S. For example, the projection unit 120 radiates the projection light L toward a second surface of the projection substrate S located in the +Z direction. The projection light L corresponds to an image to be shown to the user, and for example, when a screen or the like is installed on a plane substantially parallel to the XY plane and the projection light L is projected thereon, an image M1 to be observed by the user is displayed on that screen. The image to be shown to the user is, for example, an AR (Augmented Reality) image or a VR (Virtual Reality) image created by a processor included in the projection unit 120. In this manner, the projection unit 120 irradiates a plane substantially parallel to the XY plane with a plurality of light rays forming the image M1 as the projection light L.

In the present embodiment, an example in which the projection unit 120 projects an approximately rectangular image M1, whose longitudinal direction is the X-axis direction on the plane, substantially parallel to the XY plane will be described. In FIG. 4, five light rays, from among the plurality of light rays radiated by the projection unit 120, are shown as input light rays 20. For example, a light ray corresponding to the upper left pixels of the image is a first input light ray 20a, a light ray corresponding to the lower left pixels of the image is a second input light ray 20b, a light ray corresponding to the center pixels of the image is a third input light ray 20c, a light ray corresponding to the upper right pixels of the image is a fourth input light ray 20d, and a light ray corresponding to the lower right pixels of the image is a fifth input light ray 20e.

For example, the projection unit 120 irradiates the incident region 210 of the projection substrate S with such projection light L so as to form an upright virtual image at infinity or at a predetermined position. The projection light incident on the incident region 210 passes through the splitting region 220 and is emitted from the emission region 230 as the image light P. The image light P is emitted from the emission region 230 and enters the user's eyes, which are at a distance d from the projection substrate S. The image light P forms an image M2 on the retina of the user's eyes. In this way, the image light P includes a plurality of light fluxes that form the image M2.

In FIG. 4, five light fluxes, from among a plurality of light fluxes which are radiated from a circular region C of the emission region 230 of the projection substrate S and formed into an image at a predetermined position, are shown as output light fluxes 30. For example, a light flux formed into an image as the lower right pixels of the image is designated as a first output light flux 30a, a light flux formed into an image as the upper right pixels of the image is defined as a second output light flux 30b, a light flux formed into an image as the center pixels of the image is designated as a third output light flux 30c, a light flux formed into an image as the lower left pixels of the image is designated as a fourth output light flux 30d, and a light flux formed into an image as the upper left pixels of the image is designated as a fifth output light flux 30e.

Each light flux corresponds to one of the plurality of input light rays 20 entering from the projection unit 120. For example, the first output light flux 30a corresponds to the first input light ray 20a, and the first output light flux 30a includes a plurality of light rays generated by a plurality of splittings, diffractions, and the like of the first input light ray 20a that take place from the incident region 210 to the emission region 230 of the projection substrate S. Similarly, the second output light flux 30b corresponds to the second input light ray 20b, the third output light flux 30c corresponds to the third input light ray 20c, the fourth output light flux 30d corresponds to the fourth input light ray 20d, and the fifth output light flux 30e corresponds to the fifth input light ray 20e.

In other words, the image M2, which is the image light P emitted from the emission region 230 and formed on the retina of the user's eyes, corresponds to the image M1 projected with the projection light L radiated by the projection unit 120.
In this way, the user wearing the glasses-type terminal 10 can perceive the image M2 as if it were projected onto the second surface of the projection substrate S, superimposed on a view seen through the projection substrate S. In other words, the emission region 230 functions as the display region for displaying the image M2 corresponding to the image M1 projected with the projection light L.

In FIG. 4, the image M2 observed by the user is an image obtained by inverting the image M1 projected with the projection light L vertically and horizontally. The image M1 projected with the projection light L may be a still image, or instead, may be a moving image.

In the projection substrate S, the emission region 230 emits the image light P having a quantity of light that is uniform across the entire emission region 230, whereby the user wearing the glasses-type terminal 10 can view a natural image M2 having a uniform quantity of light across the entire image. In this case, after widening the angular range of light that can be guided by the incident region 210 and the splitting region 220, sufficient light must be supplied to the entire emission region 230. In addition, in order for the user to view, as the image M2 having a uniform quantity of light, light including a plurality of wavelengths, such as a full-color image, the incident region 210 and the splitting region 220 must, for the light including the plurality of wavelengths, widen the angular range of light that can be guided and supply the light to the entire emission region 230.

The angular range of light that is guided by the incident region 210 and the splitting region 220 can be increased by increasing the refractive index of the projection substrate S. However, since the refractive index of the projection substrate S is determined by a material such as glass, plastic, or resin, there is a limit to the magnitude of the refractive index. Conventionally, by stacking projection substrates S to form a multilayered structure, the area of the emission region 230 is increased, or the image light P including light having a plurality of wavelengths is emitted. An example in which the projection substrates S are stacked to form a multilayered structure will now be described.

### <Glasses-type terminal D including multilayered projection substrates S>

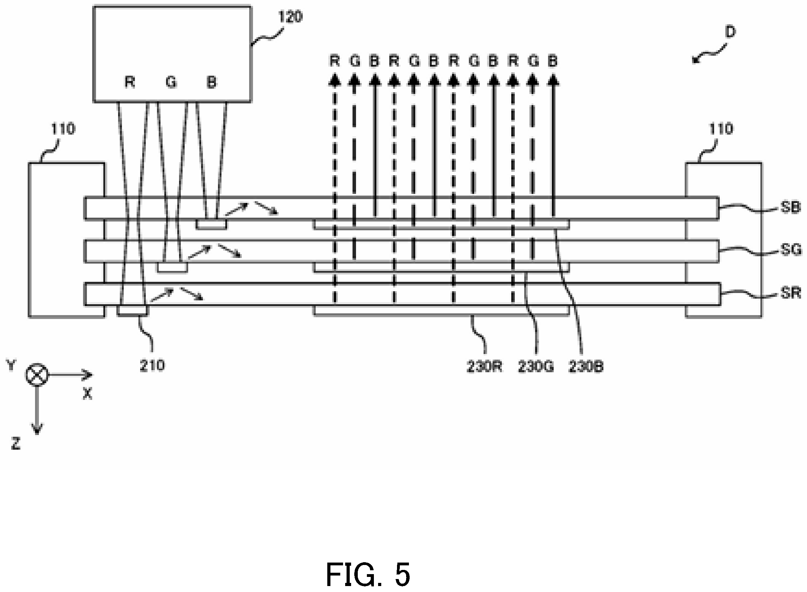

FIG. 5 shows a configuration example of a glasses-type terminal D in which conventional projection substrates S are stacked to form a multilayered structure. In the glasses-type terminal D shown in FIG. 5, components substantially the same functions as those of the glasses-type terminal 10 shown in FIG. 2 are denoted by the same reference numerals, and description thereof is omitted. The appearance of the glasses-type terminal D may be substantially the same as that of the glasses-type terminal 10 shown in FIG. 1.

A plurality of projection substrates S are fixed to the frame 110 of the glasses-type terminal D. In this configuration, the plurality of projection substrates S are fixed to the frame 110 in such a manner that emission regions 230, provided on each of the plurality of projection substrates S, overlap at least partially in a plan view that is substantially parallel to the XY plane. FIG. 5 shows an example in which projection substrates SR, SG, and SB are fixed to the frame 110 of the glasses-type terminal D, and emission regions 230R, 230G, and 230B of the three projection substrates S overlap each other in a plan view in the XY plane.

The projection unit 120 irradiates the incident regions 210 provided on each of the plurality of projection substrates S with projection lights having different wavelengths, respectively. Accordingly, the emission regions 230 provided on each of the plurality of projection substrates S respectively emit image light, corresponding to the projection lights respectively radiated onto the plurality of incident regions 210 from the projection unit 120, from the second surface of the plurality of projection substrates S to the user's eyes.

The user wearing such a glasses-type terminal D observes an image in which the image lights of different wavelengths are superimposed, allowing the user to observe an image with mixed colors. FIG. 5 shows an example in which the projection unit 120 irradiates the incident regions 210 of the three projection substrates S with three projection lights corresponding to three primary colors of RGB, namely red, green, and blue, which form an image. Then, the three projection substrates S superimpose three image lights corresponding to the three primary colors of RGB and emit the superimposed image lights to the user's eyes. By doing this, the user can observe an image having a plurality of 2ⁿ colors, for example. Here, n is a positive integer such as 4, 8, 16, 24 (corresponding to a full-color image).

In the example of FIG. 5, three projection substrates S are provided in the glasses-type terminal D, but the number of projection substrates S is not limited to three. The glasses-type terminal D may include two projection substrates S. One of the projection substrates S may guide red and green projection light and the other projection substrate S may guide blue projection light. In this case, one of the two projection substrates S may guide red projection light, and the other projection substrate S may guide green and blue projection light. Further, one of the two projection substrates S may guide projection light in a red wavelength band and a portion of a green wavelength band, and the other projection substrate S may guide projection light in the remaining portion of the green wavelength band and a blue wavelength band.

Alternatively, the glasses-type terminal D may be configured such that the plurality of projection substrates S are fixed to the frame 110 in such a manner that the emission regions 230 of the plurality of projection substrates S do not overlap at least partially in a plan view substantially parallel to the XY plane. As a result, when the user views the image light emitted from the plurality of projection substrates S, the user can observe an image having a larger area than that of a single emission region 230.

As described above, by stacking the projection substrates S to form a multilayered structure, it is possible to enlarge the area of the image that can be observed by the user or to make the color of the image multicolored. However, stacking the projection substates S to form a multilayered structure increases the manufacturing cost of the glasses-type terminal D. Therefore, the projection substrate 100 according to the present embodiment is a single-layer substrate, and is capable of enlarging the area of an image that can be observed by the user or making the color of the image multicolored with a smaller number of layers. First, an optical path of the projection substrate 100 will be described.

### <Optical path of projection substrate 100>

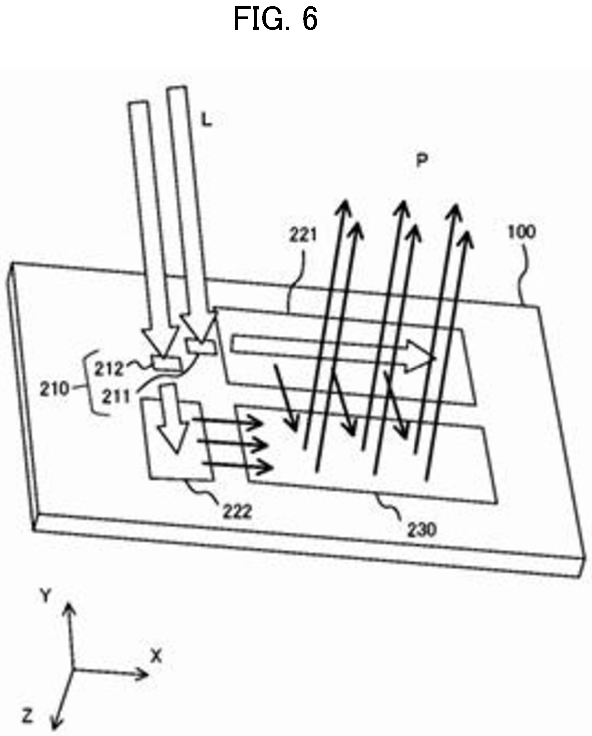

FIG. 6 schematically illustrates an optical path of projection light in the projection substrate 100 according to the present embodiment. The projection substrate 100 includes the incident region 210, a first splitting region 221, a second splitting region 222, and the emission region 230. A part of the projection light L enters the incident region 210, passes through the first splitting region 221, and is emitted as the image light P from the emission region 230. Further, at least a part of the remaining projection light L enters the incident region 210, passes through the second splitting region 222, and is emitted as the image light P from the emission region 230.

As described above, the projection substrate 100 emits the projection light L incident on the incident region 210 as the image light P from the emission region 230 via the two paths. Next, such a projection substrate 100 will be described.

### <Configuration example of projection substrate 100>

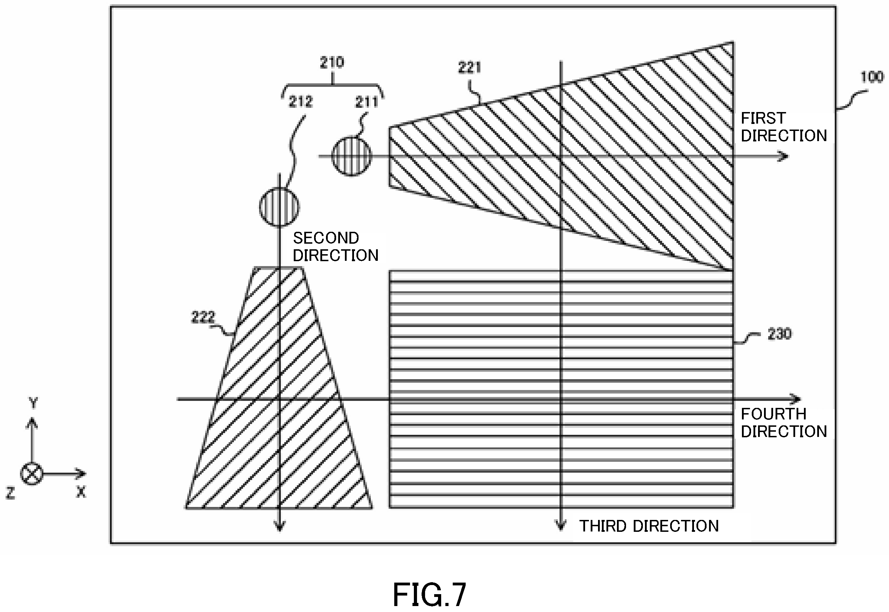

FIG. 7 shows a configuration example of the projection substrate 100 according to the present embodiment. FIG. 7 shows an example in which the first surface and the second surface of the projection substrate 100 are disposed substantially parallel to the XY plane. The projection substrate 100 is a substrate for projecting the image light onto the second surface, which is the opposite side of the first surface, while transmitting at least a part of the light that entered from the first surface to the second surface. The projection substrate 100 is a substrate formed of glass, plastic, resin, or the like. The projection substrate 100 includes the incident region 210, the first splitting region 221, the second splitting region 222, and the emission region 230.

The incident region 210 receives the projection light for projecting image light. The incident region 210 may be formed on the first surface of the projection substrate 100, or may instead be formed on the second surface of the projection substrate 100. The incident region 210 includes a diffraction grating that guides at least a part of the incident projection light toward a first direction within the projection substrate 100 and toward a second direction different from the first direction. Here, the first direction is a direction in which the first splitting region 221 is disposed, and the second direction is a direction in which the second splitting region 222 is disposed. In other words, the incident region 210 guides at least a part of the incident projection light to the first splitting region 221 and the second splitting region 222. The first direction and the second direction may be orthogonal to each other, or may not be orthogonal to each other.

The incident region 210 includes, for example, a first diffraction grating 211 and a second diffraction grating 212. The first diffraction grating 211 includes a plurality of grooves formed with a first period, and receives, among the projection light incident on the incident region 210, light that is emitted to the first splitting region 221. The plurality of grooves are arranged on the upper surface of the projection substrate 100 in the same direction with a predetermined groove width and interval, thereby functioning as a diffraction grating. The first diffraction grating 211 may be a reflective diffraction grating or a transmissive diffraction grating.

The first period of the plurality of grooves is in the range of about 10 nm to about 10 µm, for example. The first period is preferably in the range of about 100 nm to about 1 µm. The first period is more preferably in the range of about 200 nm to about 800 nm. The depth of the plurality of grooves is in the range of about 1 nm to about 10 µm. The depth of the plurality of grooves is preferably in the range of about 10 nm to about 250 nm. The depth of the plurality of grooves is more preferably in the range of about 50 nm to about 250 nm.

The fill factor of the plurality of grooves is in the range of about 0.05 to about 0.95. The fill factor of the plurality of grooves is preferably in the range of about 0.3 to about 0.7. Here, the fill factor is a value obtained by dividing a distance between two adjacent grooves by the first period. The distance between two adjacent grooves may be referred to as a line, the width of the groove may be referred to as a space, and the first period may be referred to as a pitch, where the pitch is the sum of the line and the space, and the fill factor is a value obtained by dividing the line by the pitch.

The plurality of grooves are arranged in a direction from the incident region 210 toward the first splitting region 221, for example. Since the projection light is incident on the incident region 210 while converging, the incident region 210 guides the projection light to the first splitting region 221 so as to have a spread angle around the first direction within the plane of the projection substrate 100.

The second diffraction grating 212 includes a plurality of grooves formed with a second period, and receives, among the projection light incident on the incident region 210, light that is emitted to the second splitting region 222. The second diffraction grating 212 is provided at a position different from that of the first diffraction grating 211. The plurality of grooves of the second diffraction grating 212 functions as a diffraction grating in the same manner as the plurality of grooves of the first diffraction grating 211. The second diffraction grating 212 may be a reflective diffraction grating or a transmissive diffraction grating. The first diffraction grating 211 and the second diffraction grating 212 may be formed integrally, or may instead be formed separately.

The second period of the plurality of grooves is formed within a range similar to that of the first period. The second period may be the same period as the first period, or may instead be a period different from the first period. The depth and fill factor of the plurality of grooves of the second diffraction grating 212 are also formed within a similar range as the depth and fill factor of the plurality of grooves of the first diffraction grating 211.

The plurality of grooves of the second diffraction grating 212 are arranged in a direction from the incident region 210 toward the second splitting region 222, for example. The incident region 210 guides the projection light to the second splitting region 222 so as to have a spread angle around the second direction within the plane of the projection substrate 100.

As described above, the incident region 210 includes the first diffraction grating 211 that guides projection light to the first splitting region 221 and the second diffraction grating 212 that guides projection light to the second splitting region 222, and guides the incident projection light in the first direction and the second direction. In this case, the projection unit 120 is configured to irradiate the first diffraction grating 211 of the incident region 210 with projection light to be guided to the first splitting region 221, and to irradiate the second diffraction grating 212 of the incident region 210 with projection light to be guided to the second splitting region 222.

The first splitting region 221 is provided at a position in the first direction from the incident region 210, and receives the projection light guided in the incident region 210. The first splitting region 221 may be formed on the first surface of the projection substrate 100, or may instead be formed on the second surface of the projection substrate 100. The first splitting region 221 includes a diffraction grating that guides at least a part of the incident projection light in a third direction different from the first direction. Here, the third direction is a direction in which the emission region 230 is disposed. In other words, the first splitting region 221 guides at least a part of the incident projection light to the emission region 230. The first direction and the third direction may be orthogonal to each other, or may not be orthogonal to each other.

The first splitting region 221 includes a reflective diffraction grating and guides the projection light in the direction of the emission region 230 through reflective diffraction. The first splitting region 221 has, for example, a rectangular shape whose longitudinal direction is in the first direction. The first splitting region 221 may have a trapezoidal shape, a fan shape, or the like, corresponding to a region in which the projection light propagates while spreading out in the XY plane.

The first splitting region 221 includes a diffraction grating in which a plurality of grooves are formed with a third period. The third period is preferably selected to be appropriate for guiding the projection light to the emission region 230. The third period is in the range of about 10 nm to about 10 µm, for example. The third period is preferably in the range of about 50 nm to 1 µm. The third period is more preferably in the range of about 100 nm to 700 nm.

The depth of the plurality of grooves is in the range of about 1 nm to about 10 µm. The depth of the plurality of grooves is preferably in the range of about 10 nm to about 250 nm. The depth of the plurality of grooves is more preferably in the range of about 10 nm to about 100 nm. The fill factor of the plurality of grooves is in the range of about 0.05 to about 0.95. The fill factor of the plurality of grooves is preferably in the range of about 0.2 to about 0.85.

The plurality of grooves of the first splitting region 221 are arranged, for example, in a predetermined direction. For example, when an angle formed between the first direction and the second direction is defined as a first angle, the plurality of grooves are formed in a direction inclined toward the third direction by an angle of 1/2 of the first angle with respect to the first direction. As an example, when the first direction is a direction substantially parallel to the X-axis direction and the second direction and the third direction are directions substantially parallel to the Y-axis direction, the first angle is approximately 90 degrees, and the plurality of grooves are arranged in the direction inclined toward the third direction by approximately 45 degrees with respect to the first direction. Alternatively, the period and the first angle of the first splitting region 221 may be realized in various combinations.

The second splitting region 222 is provided at a position in the second direction from the incident region 210, and receives the projection light guided in the incident region 210. The first splitting region 221 may be formed on the first surface of the projection substrate 100, and may instead be formed on the second surface of the projection substrate 100. The second splitting region 222 includes a diffraction grating that guides at least a part of the incident projection light in a fourth direction different from the second direction. Here, the fourth direction is a direction in which the emission region 230 is disposed. In other words, the second splitting region 222 guides at least a part of the incident projection light to the emission region 230. The second direction and the fourth direction may be orthogonal to each other, or may not be orthogonal to each other.

Similarly to the first splitting region 221, the second splitting region 222 includes a reflective diffraction grating and guides the projection light in the direction of the emission region 230 through reflective diffraction. The second splitting region 222 has, for example, a rectangular shape whose longitudinal direction is in the second direction. The second splitting region 222 may have a trapezoid shape, a fan shape, or the like, corresponding to a region in which the projection light propagates while spreading out in the XY plane.

The second splitting region 222 includes a diffraction grating in which a plurality of grooves are formed with a fourth period. The fourth period is preferably selected to be appropriate for guiding the projection light to the emission region 230. The fourth period is formed within a range similar to that of the third period. In addition, it is preferable that the depth and the fill factor of the plurality of grooves of the second splitting region 222 are formed in a range similar to the depth and the fill factor of the plurality of grooves of the first splitting region 221.

The plurality of grooves of the second splitting region 222 are arranged, for example, in a predetermined direction. For example, when an angle formed between the first direction and the second direction is defined as a first angle, the plurality of grooves are formed in a direction inclined toward the fourth direction by an angle of 1/2 of the first angle with respect to the second direction. As an example, when the first direction and the fourth direction are directions substantially parallel to the X-axis direction and the second direction is a direction substantially parallel to the Y-axis direction, the first angle is approximately 90 degrees, and the plurality of grooves are arranged in the direction inclined toward the fourth direction by approximately 45 degrees with respect to the second direction. Alternatively, the period and the first angle of the second splitting region 222 may be realized in various combinations.

The emission region 230 is provided at a position, located both in the third direction from the first splitting region 221 and in the fourth direction from the second splitting region 222, and receives the projection light guided in the first splitting region 221 and the projection light guided in the second splitting region 222, respectively. The emission region 230 may be formed on the first surface of the projection substrate 100, and may instead be formed on the second surface of the projection substrate 100. The emission region 230 includes a diffraction grating that emits at least a part of the incident projection light as image light from the second surface of the projection substrate 100.

FIG. 7 shows an example in which the emission region 230 has a rectangular shape whose longitudinal direction is in the X-axis direction on a plane substantially parallel to the XY plane, but the present invention is not limited thereto. The emission region 230 only needs to be able to guide the projection light and emit it as image light, and may have a shape such as a rectangle, a trapezoid, an oval, or an ellipse, each having a longitudinal direction in the Y-axis direction, or may alternatively have a square shape or a circular shape.

The emission region 230 has a reflective or transmissive diffraction grating and guides the image light in the direction of the user's eye through reflective or transmissive diffraction. The emission region 230 includes a two-dimensional diffraction grating that emits at least a part of the projection light incident from the first splitting region 221 and at least a part of the projection light incident from the second splitting region 222 as image light from the second surface of the projection substrate 100.

In the two-dimensional diffraction grating, for example, a plurality of grooves are formed in the third direction and the fourth direction. The plurality of grooves in the third direction are formed to have a predetermined groove width and interval, and function as a third diffraction grating that emits projection light incident from the first splitting region 221 as image light. Similarly, the plurality of grooves in the fourth direction are formed to have a predetermined groove width and interval, and function as a fourth diffraction grating that emits the projection light incident from the second splitting region 222 as image light. A more specific configuration of the two-dimensional diffraction grating is described in Patent Document 3, for example, and thus a description thereof is omitted here.

The configuration of the emission region 230 is not limited to the above-described configuration, as long as the emission region 230 can emit at least a part of the projection light incident from the first splitting region 221 and at least a part of the projection light incident from the second splitting region 222 as image light from the second surface of the projection substrate 100. For example, the emission region 230 may be formed on the first surface and the second surface of the projection substrate 100.

In this configuration, the first emission region formed on the first surface of the projection substrate 100 emits either the projection light incident from the first splitting region 221 or the projection light incident from the second splitting region 222 as image light from the second surface of the projection substrate 100. In the first emission region, for example, a plurality of grooves are formed in the third direction.

The second emission region formed on the second surface of the projection substrate 100 emits, as image light from the second surface of the projection substrate 100, the other of the projection light incident from the first splitting region 221 and the projection light incident from the second splitting region 222, which is different from the projection light emitted from the first emission region. In the second emission region, for example, a plurality of grooves are formed in the fourth direction. Accordingly, the emission region 230 is configured by a combination of one-dimensional diffraction gratings formed on the first surface and the second surface of the projection substrate 100, whereby a function similar to that of a two-dimensional diffraction grating can be achieved.

A fifth period of the plurality of grooves formed in the third direction of the emission region 230 may be a period different from the third period of the plurality of grooves of the first splitting region 221. The fifth period may be the same as the first period of the first diffraction grating 211 of the incident region 210.

Similarly, a sixth period of the plurality of grooves formed in the fourth direction of the emission region 230 may be a period different from the fourth period of the plurality of grooves of the second splitting region 222. The sixth period may be the same as the second period of the second diffraction grating 212 of the incident region 210. By making the period of the diffraction grating provided in the region into which the projection light enters and the period of the diffraction grating provided in the region where the image light is emitted coincide with each other in this manner, it is possible to reduce distortion or the like occurring in an image observed by the user.

The fifth period and the sixth period are formed in a range similar to the first period of the first diffraction grating 211 of the incident region 210. The fifth period may be the same period as the sixth period, or may alternatively be a period different from the sixth period. The depth of the plurality of grooves formed in the third direction and the fourth direction of the emission region 230 is in a range of about 1 nm to about 10 µm. The depth of the plurality of grooves in the third direction and the fourth direction are preferably in a range of about 10 nm to about 250 nm. The depth of the plurality of grooves is more preferably in a range of about 10 nm to about 100 nm. The depths of the plurality of grooves in the third direction may be the same as or different from the depths of the plurality of grooves in the fourth direction.

The fill factor of the plurality of grooves in the third direction and the fourth direction is in a range of about 0.05 to about 0.95. The fill factor of the plurality of grooves in the third direction and the fourth direction is preferably in a range of about 0.2 to about 0.85. The fill factor of the plurality of grooves in the third direction may be the same as or different from the fill factor of the plurality of grooves in the fourth direction.

For example, the emission region 230 is configured such that the projection light incident from the first splitting region 221 and the projection light incident from the second splitting region 222 overlap each other in a predetermined region. In this case, the first splitting region 221 guides at least a part of the projection light incident from the incident region 210 to a region including a predetermined region within the emission region 230, and the second splitting region 222 guides at least a part of the projection light incident from the incident region 210 to a region including a predetermined region within the emission region 230.

Accordingly, in the predetermined region, the emission region 230 can combine and emit the light guided via the first splitting region 221 and the light guided via the second splitting region 222. In other words, compared to the conventional projection substrate S that guides projection light using a single path, the emission region 230 can emit a larger amount of projection light as image light from the predetermined region.

In addition, the emission region 230 may be configured such that at least a part of the projection light incident from the first splitting region 221 and at least a part of the projection light incident from the second splitting region 222 do not overlap with each other. In this case, the first splitting region 221 guides at least a part of the projection light incident from the incident region 210 to a region including a predetermined region within the emission region 230, and the second splitting region 222 guides at least a part of the projection light incident from the incident region 210 to a region not including the predetermined region within the emission region 230.

Accordingly, the emission region 230 can emit, as image light, the projection light guided from the first splitting region 221 from the predetermined region, and can emit, as image light, the projection light guided from the second splitting region 222 from a region different from the predetermined region. In other words, the emission region 230 can, compared to the conventional projection substrate S that guides projection light using a single path, widen a region from which the light can be emitted as image light.

The projection substrate 100 may be configured to emit, as image light, the projection light guided from the first splitting region 221 from a first region within the emission region 230, and to emit, as image light, the projection light guided from the second splitting region 222 light from a second region different from the first region within the emission region 230. In this case, the first region and the second region within the emission region 230 may be ordinary one-dimensional diffraction gratings. In addition, when the emission region 230 is formed by the first region and the second region, the emission region 230 need not include a two-dimensional diffraction grating.

As described above, the projection substrate 100 according to the present embodiment emits the projection light incident on the incident region 210 as image light from the emission region 230 by using two paths, i.e., a path for guiding the projection light to the emission region 230 via the first splitting region 221 and a path for guiding the projection light to the emission region 230 via the second splitting region 222. Accordingly, the projection substrate 100 can guide, with a single substrate, the projection light that has been guided using two layers of the conventional projection substrate S. As described above, the projection substrate 100 according to the present embodiment can reduce the number of substrates provided in the glasses-type terminal 10, thereby reducing manufacturing cost. Further, the weight of the glasses-type terminal 10 can be reduced.

For example, the incident region 210 includes the first diffraction grating 211 and the second diffraction grating 212 having different periods, guides light having a first wavelength included in the projection light to the first splitting region 221 and guides light having a second wavelength different from the first wavelength included in the projection light to the second splitting region 222. The first splitting region 221 includes, for example, a diffraction grating corresponding to the first wavelength, and guides the light having the first wavelength to the predetermined region of the emission region 230. In addition, the second splitting region 222 may include a diffraction grating corresponding to the second wavelength, and may guide the light having the second wavelength to the predetermined region of the emission region 230. In this case, the emission region 230 includes a two-dimensional diffraction grating corresponding to the first wavelength and the second wavelength in the predetermined region.

Accordingly, the projection substrate 100 can guide light having the first wavelength and light having the second wavelength with a single-substrate and emit the light as image light from the predetermined region without using a two-layer projection substrate formed by combining the conventional projection substrate S that guides light having the first wavelength and the conventional projection substrate S that guides light having the second wavelength. The projection substrate 100 may guide light in a first wavelength band including light having the first wavelength and light in a second wavelength band including light having the second wavelength.

For example, the incident region 210 guides light having red and green wavelengths among the projection light to the first splitting region 221, and guides light having green and blue wavelengths among the projection light to the second splitting region 222. In this case, the path for guiding light to the emission region 230 via the first splitting region 221 may guide light in a portion of the green wavelength band that is closer to the red wavelength, and the path for guiding light to the emission region 230 via the second splitting region 222 may guide light in the remaining portion of the green wavelength band that is closer to the blue wavelength.

The first splitting region 221 includes, for example, a diffraction grating corresponding to red and green wavelength bands, and guides red and green light to the predetermined region of the emission region 230. The second splitting region 222 may include a diffraction grating corresponding to green and blue wavelength bands, and guide green and blue light to the predetermined region of the emission region 230. In this case, the emission region 230 includes, in the predetermined region, a two-dimensional diffraction grating corresponding to the red and green wavelength bands and the green and blue wavelength bands.

Accordingly, the projection substrate 100 can guide red, green, and blue light with a single substrate and emit the light as image light from the predetermined region, without using a two-layer projection substrate formed by combining the conventional projection substrate S that guides red and green light and the conventional projection substrate S that guides green and blue light. In other words, the projection substrate 100 can emit, at low cost, full-color image light, white image light, and the like from the emission region 230.

Combinations of frequency bands of light guided by the path for guiding light to the emission region 230 via the first splitting region 221 and the path for guiding light to the emission region 230 via the second splitting region 222 are not limited to the above combinations. For example, the path for guiding light to the emission region 230 via the first splitting region 221 may guide red and green projection light, and the path for guiding light to the emission region 230 via the second splitting region 222 may guide blue projection light. In addition, the path for guiding light to the emission region 230 via the first splitting region 221 may guide red projection light, and the path for guiding light to the emission region 230 via the second splitting region 222 may guide green and blue projection light.

Alternatively, the incident region 210 may include a plurality of diffraction gratings having the same period, and the wavelength of projection light guided to the first splitting region 221 may be the same as the wavelength of projection light guided to the second splitting region 222. In this case, the frequency band of light guided by the path for guiding light to the emission region 230 via the first splitting region 221 and that guided by the path for guiding light to the emission region 230 via the second splitting region 222 are the same frequency band.

For example, the projection substrate 100 is configured such that the projection light incident from the first splitting region 221 and the projection light incident from the second splitting region 222 overlap each other in a predetermined region of the emission region 230. In this case, the projection unit 120 supplies the same projection light to the first diffraction grating 211 and the second diffraction grating 212 of the incident region 210. Thus, the projection substrate 100 outputs the same image light from the emission region 230 via the two paths.

Therefore, even if a manufacturing defect, adhesion of dust, or the like occurs in one of the two paths, as long as the other path operates normally, the user can correctly visually recognize the image light. By guiding light of the same wavelength using the two paths in this manner, the projection substrate 100 can improve manufacturing yield and reduce manufacturing cost.

In addition, for example, the projection substrate 100 is configured such that at least a part of the projection light incident from the first splitting region 221 and the projection light incident from the second splitting region 222 do not overlap in a predetermined region of the emission region 230. In this case, as described above, the projection substrate 100 can use the emission region 230 having a larger area than that of the conventional projection substrate S that emits image light via a single path, and can reduce manufacturing cost and allow the user to visually recognize a large-screen image.

Such a projection substrate 100 can be realized by forming diffraction gratings corresponding to the incident region 210, the splitting region 220, and the emission region 230 on a first surface or a second surface of a glass substrate or the like. The grooves forming the diffraction grating are made of resist, resin, or the like, for example. Therefore, the projection substrate 100 according to the present embodiment is a substrate that can be easily produced by forming grooves with predetermined intervals and depths for each region, without incorporating a complicated optical system.

### <Configuration example of multilayered glasses-type terminal 10>

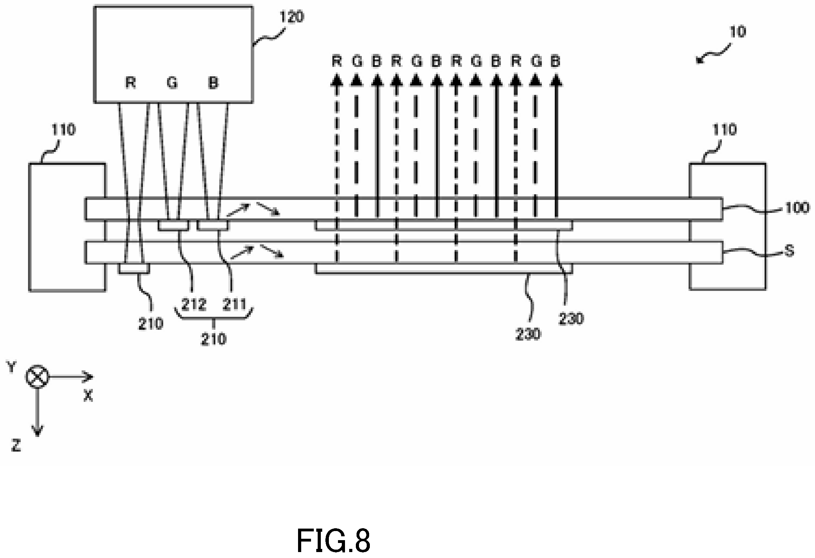

The glasses-type terminal 10 described above may be configured by combining a plurality of such projection substrates 100, or may be configured by combining the projection substrate 100 according to the present embodiment and the conventional projection substrate S. FIG. 8 shows a configuration example of the glasses-type terminal 10 in which the projection substrate 100 according to the present embodiment and the conventional projection substrate S are stacked to form a multilayered structure.

In the projection substrate 100, the path for guiding light to a predetermined region of the emission region 230 via the first splitting region 221 guides the green projection light, and the path for guiding light to the predetermined region of the emission region 230 via the second splitting region 222 guides the blue projection light. Then, the projection substrate S guides the red projection light to the predetermined region of the emission region 230. Thus, the glasses-type terminal 10 can reduce the number of substrates by one, compared to the conventional glasses-type terminal D described with reference to FIG. 5.

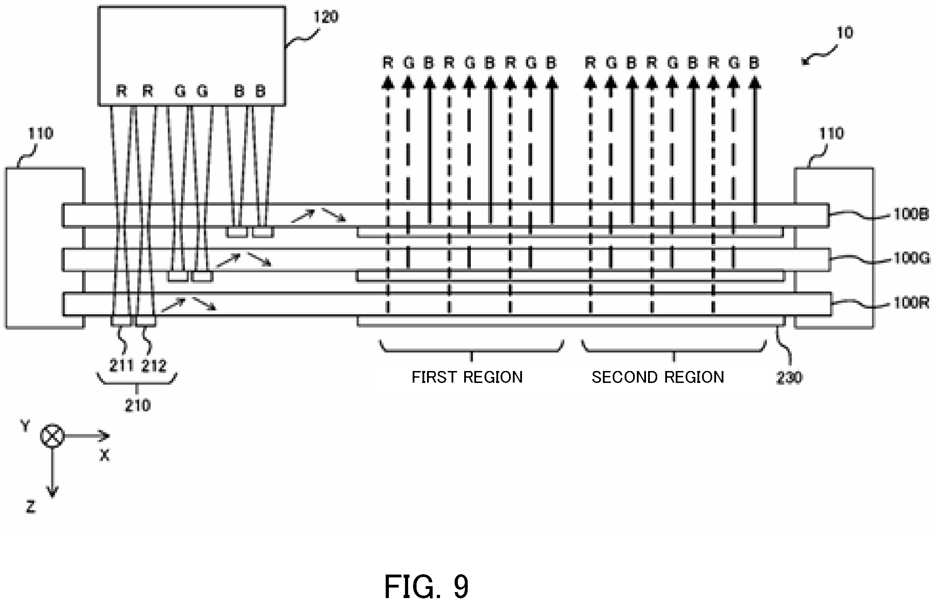

FIG. 9 shows a configuration example of the glasses-type terminal 10 in which the projection substrates 100 according to the present embodiment are stacked to form a multilayered structure. FIG. 9 illustrates an example in which the glasses-type terminal 10 includes a total of three substrates that are a first projection substrate 100R, a second projection substrate 100G, and a third projection substrate 100B.

In the first projection substrate 100R, the path for guiding light to the first region of the emission region 230 via the first splitting region 221 guides the red projection light, and the path for guiding light to the second region of the emission region 230 via the second splitting region 222 guides the red projection light. In the second projection substrate 100G, the path for guiding light to the first region of the emission region 230 via the first splitting region 221 guides the green projection light, and the path for guiding light to the second region of the emission region 230 via the second splitting region 222 guides the green projection light.

In the third projection substrate 100B, the path for guiding light to the first region of the emission region 230 via the first splitting region 221 guides the blue projection light, and the path for guiding light to the second region of the emission region 230 via the second splitting region 222 guides the blue projection light. As a result, the glasses-type terminal 10 can double the area of the emission region 230 without changing the number of substrates, compared to the conventional glasses-type terminal D described with reference to FIG. 5.

In the projection substrate 100 according to the present embodiment described above, an example has been described in which the incident region 210 has two portions (the first diffraction grating 211 and the second diffraction grating 212) on which the projection light is incident, but the embodiment is not limited thereto. The incident region 210 may include, for example, a two-dimensional diffraction grating. The two-dimensional diffraction grating guides at least a part of the incident projection light to the first splitting region 221, and guides at least a part of the remaining light of the incident projection light to the second splitting region 222.

In this case, the projection unit 120 superimposes the projection light guided via the first splitting region 221 and the projection light guided via the second splitting region 222 and irradiates the two-dimensional diffraction grating of the incident region 210 with the light. Accordingly, the area of the incident region 210 can be reduced. When the incident region 210 includes a two-dimensional diffraction grating, the first direction and the second direction are preferably orthogonal to each other.

In the projection substrate 100 according to the present embodiment described above, an example has been described in which the first splitting region 221 and the second splitting region 222 guide the incident projection light toward the emission region 230. In addition, the first splitting region 221 and the second splitting region 222 may include a plurality of divided regions having different diffraction efficiencies, and may adjust the intensity of light guided toward the emission region 230 depending on a distance from the incident region 210.

Accordingly, the first splitting region 221 can guide, to the emission region 230, projection light whose light intensity is made uniform in the first direction, and the second splitting region 222 can guide, to the emission region 230, the projection light whose light intensity is made uniform in the second direction. In addition, the first splitting region 221 and the second splitting region 222 may each include a reflection region that reflects guided light at an end portion opposite to the incident region 210. The reflection region reflects light that would otherwise leak to the outside from the end portions of the first splitting region 221 and the second splitting region 222 opposite to the incident region 210 so as to return the light to the splitting region, thereby guiding the light to the emission region 230 without waste.

In addition, the emission region 230 may include divided regions, and may adjust the intensity of image light to be emitted according to a position of the emission region 230 so that the intensity of the image light across the entire emission region 230 becomes uniform. In addition, the emission region 230 may include reflection regions at an end portion opposite to the first splitting region 221 and at an end portion opposite to the second splitting region 222. The above-described divided regions and reflection regions are described in Patent Document 2 and the like, and so detailed description thereof will be omitted here.

The present invention is explained based on the exemplary embodiments. The technical scope of the present invention is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

### [Description of symbols]

10 Glasses-type terminal
100 Projection substrate
110 Frame
120 Projection unit
210 Incident region
211 First diffraction grating
212 Second diffraction grating
220 Splitting region
221 First splitting region
222 Second splitting region
230 Emission region

## Claims

1. A projection substrate for projecting image light onto a second surface while transmitting at least a part of light that entered from a first surface to the second surface opposite to the first surface, the projection substrate comprising:
an incident region configured to receive projection light for projecting the image light and including a diffraction grating that guides at least a part of the incident projection light toward a first direction within the projection substrate and toward a second direction different from the first direction;
a first splitting region provided at a position in the first direction from the incident region, configured to receive the projection light guided in the incident region, and including a diffraction grating that guides at least a part of the incident projection light toward a third direction different from the first direction;
a second splitting region provided at a position in the second direction from the incident region, configured to receive the projection light guided in the incident region, and including a diffraction grating that guides at least a part of the incident projection light toward a fourth direction different from the second direction; and
an emission region provided at a position, located both in the third direction from the first splitting region and in the fourth direction from the second splitting region, configured to receive the projection light guided in the first splitting region and the projection light guided in the second splitting region, respectively, and including a diffraction grating that emits at least a part of the incident projection light as the image light from the second surface.

2. The projection substrate according to claim 1, wherein the incident region includes:
a first diffraction grating configured to receive, among the projection light incident on the incident region, light emitted to the first splitting region; and
a second diffraction grating provided at a position different from that of the first diffraction grating and configured to receive, among the projection light incident on the incident region, light emitted to the second splitting region.

3. The projection substrate according to claim 1, wherein the incident region includes a two-dimensional diffraction grating, guides at least a part of the incident projection light to the first splitting region, and guides at least a part of the remaining light of the incident projection light to the second splitting region.

4. The projection substrate according to claim 1, wherein the incident region includes a plurality of diffraction gratings having different periods or a two-dimensional diffraction grating, guides light having a first wavelength included in the projection light to the first splitting region, and guides light having a second wavelength different from the first wavelength included in the projection light to the second splitting region.

5. The projection substrate according to claim 4, wherein the incident region guides light having red and green wavelengths among the projection light to the first splitting region, and guides light having green and blue wavelengths among the projection light to the second splitting region.

6. The projection substrate according to claim 1, wherein the incident region includes a plurality of diffraction gratings having the same period or a two-dimensional diffraction grating, and a wavelength of the projection light guided to the first splitting region is the same as a wavelength of the projection light guided to the second splitting region.

7. The projection substrate according to claim 1, wherein the first splitting region guides at least a part of the projection light incident from the incident region to a region including a predetermined region within the emission region, and
the second splitting region guides at least a part of the projection light incident from the incident region to a region not including the predetermined region within the emission region.

8. The projection substrate according to claim 1, wherein the first splitting region guides at least a part of the projection light incident from the incident region to a region including a predetermined region within the emission region, and
the second splitting region guides at least a part of the projection light incident from the incident region to a region including the predetermined region within the emission region.

9. The projection substrate according to claim 1, wherein the emission region includes a two-dimensional diffraction grating that emits at least a part of the projection light incident from the first splitting region and at least a part of the projection light incident from the second splitting region as the image light from the second surface.

10. A glasses-type terminal worn by a user, the glasses-type terminal comprising:
the projection substrate according to any one of claims 1 to 9, which is provided as at least one of a lens for a right eye and a lens for a left eye of the user, and projects the image light onto the second surface, while transmitting at least a part of light entering from the first surface through the eyes of the user;
a frame that fixes the projection substrate; and
a projection unit provided in the frame and configured to irradiate the incident region of the projection substrate with the projection light for projecting the image light to the emission region.
